# EUROPÄISCHE PATENTSCHRIFT

(11) **EP 0 766 706 B1**
(45) Veröffentlichungstag und Bekanntmachung des Hinweises auf die Patenterteilung: **12.12.2001**
(21) Anmeldenummer: 95923261.2
(22) Anmeldetag: 08.06.1995
(51) Int. Cl.: C08F 297/04, C08L 53/02

(54) **THERMOPLASTISCHES ELASTOMER**
THERMOPLASTIC ELASTOMER
ELASTOMERE THERMOPLASTIQUE

(30) Priorität: 17.06.1994 DE 4420952
(43) Veröffentlichungstag der Anmeldung: 09.04.1997
(73) Patentinhaber: BASF AKTIENGESELLSCHAFT, 67056 Ludwigshafen (DE)
(72) Erfinder: KNOLL, Konrad, D-67069 Ludwigshafen (DE); GAUSEPOHL, Hermann, D-67112 Mutterstadt (DE); NIESSNER, Norbert, D-67159 Friedelsheim (DE); BENDER, Dietmar, D-67459 Böhl-Iggelheim (DE); NAEGELE, Paul, D-67166 Otterstadt (DE)
(86) Internationale Anmeldenummer: EP9502207
(87) Internationale Veröffentlichungsnummer: WO9535335

(56) Entgegenhaltungen:
- EP-A- 0 512 530
- GB-A- 2 138 009
- US-A- 4 054 616
- US-A- 4 122 134
- CHEMICAL ABSTRACTS, vol. 104, no. 14, April 1986 Columbus, Ohio, US; abstract no. 111041z, SHIRAKI TOSHINORI ET AL 'Heat-shrinkable block copolymer films' Seite 59; Spalte 1; & JP,A,60 224 521 (ASAHI CHEMICAL IND.) 21.April 1984
- CHEMICAL ABSTRACTS, vol. 83, no. 24, 15.Dezember 1975 Columbus, Ohio, US; abstract no. 194374g, IBARAGI TOSHIO ET AL. 'transparant, impact resistant styrene-butadiene polymers' Seite 49; Spalte 1; & JP,A,50 095 385 (ASAHI CHEMICAL IND.) 29.Juli 1975

## Beschreibung

Blockcopolymere von Vinylaromaten (z.B. Styrol) und Dienen (z.B. Butadien) sind Copolymere aus mehreren aneinandergereihten oder sonstwie verknüpften Polymermolekül-Bereichen (sog. Blöcken), die in sich mehr oder weniger einheitlich aufgebaut sind. Sie können je nach Struktur und Gehalt an Dienmonomeren - bei einer bestimmten Temperatur - insgesamt elastomere, d.h. kautschukelastische Eigenschaften oder steife, nicht-kautschukelastische Eigenschaften haben, d.h. sie verhalten sich nach außen hin insgesamt entweder kautschukelastisch, ähnlich wie ein Polydien und haben z.B. als sog. SB-Rubber Bedeutung, oder wie transparente, schlagzähe Styrolpolymere. Es ist üblich, in Anlehnung an die Bezeichnungen beim schlagzäh modifizierten Polystyrol diejenigen Molekülteile, die das kautschukelastische Verhalten bestimmen, als Weichphase und die starren Molekülteile (den reinen Polystyrolanteil) als Hartphase zu bezeichnen. SB-Rubber können nicht wie Thermoplaste verarbeitet werden, sondern müssen wie gewöhnliche Dienpolymere zum Gebrauch vulkanisiert werden, was ihre Verwendung stark einschränkt.

Die Erfindung betrifft normalerweise transparente, rein thermoplastisch verarbeitbare Blockcopolymere von Vinylaromaten und Dienen mit elastomerem Verhalten und besonderen mechanischen Eigenschaften.

### Hierzu ist folgendes vorauszuschicken:

Die zu sog. lebenden Polymeren (living polymers) führende anionische Polymerisation, bei der das Wachstum eines Kettenmoleküls an einem Kettenende stattfindet, das mangels spontaner Kettenabbruch- oder übertragungsreaktion theoretisch beliebig lange lebt (polymerisationsfähig bleibt), und die Umsetzung des lebenden Polymeren mit ein- oder mehrfunktionellen Reaktionspartnern bietet bekanntlich eine vielseitig verwendbare Möglichkeit zum Aufbau von Blockcopolymeren, wobei die Auswahl an Monomeren allerdings beschränkt ist; in der Praxis haben nur Blockcopolymere von vinylaromatischen Verbindungen, also Styrol und seinen Abkömmlingen einerseits und Dienen, im wesentlichen Butadien oder Isopren andererseits Bedeutung erlangt. Blockcopolymere erhält man dadurch, daß jeweils bis annähernd zur Erschöpfung eines Monomerenvorrats polymerisiert wird und das oder die Monomeren dann gewechselt werden. Dieser Vorgang ist mehrfach wiederholbar.

Lineare Blockcopolymere werden z.B. in den US-PSen 3 507 934 und 4 122 134 beschrieben. Sternförmige Blockcopolymere sind z.B. aus den US-PSen 4 086 298; 4 167 545 und 3 639 517 bekannt.

Das Eigenschaftsprofil dieser Blockcopolymeren wird wesentlich durch den Gehalt einpolymerisierter Dienmonomerer, d.h. Länge, Anordnung und Mengenverhältnis von Polydien- und Polystyrol-Blöcken geprägt. Darüberhinaus spielt die Art und Weise des Übergangs zwischen unterschiedlichen Blöcken eine wichtige Rolle: Man kennt scharfe und sog. verschmierte (tapered) Übergänge, je nachdem, ob der Monomerenwechsel abrupt oder allmählich stattfindet. Im letzteren Fall tritt eine mehr oder weniger statistische Sequenzlängenverteilung auf.

Blockcopolymere mit scharf getrennten Blöcken sind bei identischem Molekulargewicht und Dienanteil weniger zäh als solche mit verschmiertem Blockübergang. Will man zu zäheren Blockcopolymeren gelangen, wird man folglich Blockübergänge mit statistischer Sequenzlängenverteilung von Dien- und Vinylaromaten im Übergangsbereich bevorzugen (vgl. US-PS 4 122 134 und EP-A-0 316 671).

Bei morphologischen Untersuchungen von Blockcopolymeren zeigt sich nun, daß bei verschmiertem Blockübergang die Sequenzlänge der reinen Dienphase gegenüber der Polystyrolphase und somit das Volumenverhältnis zugunsten der Dienphase verschoben ist. Durch die Art des Blockübergangs läßt sich also die Zähigkeit eines Polymerisats steigern, ohne daß der Diengehalt erhöht werden muß. Dies kann vorteilhaft sein, da mit wachsendem Diengehalt die Fließfähigkeit der Schmelze und die Thermostabilität der Polymeren abnimmt und die Gefahr der Vernetzung der Dienphase zunimmt. Bei Spritzguß- und Extrusionsverarbeitung macht sich die Vernetzung durch sog. Stippen und Trübungen im Polymerisat bemerkbar.

Die Erzielung verschmierter Blockübergänge durch gesteuerten Wechsel der Monomerenzugabe ist nun technisch aufwendig und führt zu einer längeren Reaktionsdauer bzw. geringerer Raum-Zeit-Ausbeute, was die Herstellungskosten erhöht. Im Grenzfall, der kontinuierlich gesteuerten Zugabe (vgl. US-PS 4 346 198 und 4 248 984) nimmt die Umsetzungsdauer wegen der ungünstigen Lage der Copolymerisationsparameter von Vinylaromaten und Dienen extrem zu und man gewinnt nur Polymere mit inhomogener Verteilung der Dien- und Vinylaromaten-Einheiten im Bereich des Blockübergangs, was sich wie eine Vermehrung der Zahl der Übergänge auswirkt. Deutlich wird dies durch eine niedrige Glastemperatur (T_{g} unterhalb von -50°C, vgl. US-PS 4 346 198, Beispiel 1) und schlechte Verarbeitungseigenschaften.

Besonders Materialien mit einem Dien-Gehalt von über 35 Gew.-%, die aufgrund ihres Eigenschaftsprofils (Zähigkeit, Transparenz, Gasdurchlässigkeit) für medizintechnische Anwendungen wie Infusionsschläuche, Infusionstropfkammern und Dehnfolien geeignet wären, sind nur sehr schwierig durch Profilextrusion, Spritzguß oder Schlauchfolienextrusion zu verarbeiten; sie sind auch trotz Stabilisierung mit Antioxidantien und Radikalfängern thermisch sehr empfindlich und neigen zur Klebrigkeit, so daß man sich aufwendig mit Additiven behelfen muß. Das sog. Blocken (Verkleben von Folien und Schläuchen auf der Rolle) und schlechte Entformbarkeit können die Verarbeitung durch Spritzguß gänzlich unmöglich machen.

Die Erfindung hat sich die Aufgabe gestellt, durch geeignete Wahl der molekularen Struktur zu elastomeren, also sich kautschukelastisch verhaltenden Blockcopolymeren zu gelangen, die großtechnisch einfach herstellbar sind, bei niedrigem Diengehalt ein Maximum an Zähigkeit besitzen und darüberhinaus wie Thermoplaste auf Extrudern und Spritzgußmaschinen einfach zu verarbeiten sind.

Erfindungsgemäß wird dies, allgemein ausgedrückt, dadurch möglich, daß man in einem Vinylaromat-Dien-Blockcopolymerisat aus Blöcken, die eine Hartphase (Blocktyp A) und solchen, die eine Weichphase bilden, an die Stelle eines reinen Polydienblocks als Weichphase einen Block B/A aus Dien- und Vinylaromaten-Einheiten treten läßt, der statistischen Aufbau besitzt. Der Aufbau kann dabei entlang der Kette im statistischen Mittel homogen oder inhomogen sein.

Unmittelbarer Erfindungsgegenstand ist ein kautschukelastisches Blockcopolymerisat aus 35 bis 85 Gew.-% Styrol und 15 bis 65 Gew.-% Butadien, wobei das Blockcopolymerisat im wesentlichen aus
a) zwei oder mehreren Blöcken A, die einpolymerisierte Einheiten Styrol und eine Glastemperatur über 25°C aufweisen und
b) mindestens einem elastomeren Block B/A, der sowohl einpolymerisierte Einheiten Styrol (A) als auch Butadien (B) enthält, mit statistischem Aufbau und einer Glasübergangstemperatur Tg von -50 bis +25°C,
besteht
und wobei der Anteil der aus den Blöcken A gebildeten Hartphase am gesamten Blockcopolymerisat 5 bis 40 Vol.-% ausmacht.

Besonders bevorzugt beträgt der Gewichtsanteil des Butadiens weniger als 50 Gew.-%.

Man erhält ein solches erfindungsgemäßes kautschukelastisches Blockcopolymerisat dadurch, daß im Rahmen der vorstehenden Parameter die Weichphase aus einen statistischen Copolymerisat eines Vinylaromaten mit einem Dien gebildet wird; statistische Copolymerisate von Vinylaromaten und Dienen erhält man durch Polymerisation in Gegenwart eines polaren Cosolvens.

Ein erfindungsgemäßes Blockcopolymerisat kann z.B. durch eine der allgemeinen Formeln (2), (5) bis (7) oder (9) bis 11 dargestellt werden:

(2) (A-B/A)ₙ-A;

(5) X-[(B/A-A)ₙ]ₘ₊₁;

(6) X-[(A-B/A)ₙ-A]ₘ₊₁;

(7) X-[(B/A-A)ₙ-B/A]ₘ₊₁;

(9) Y-[(B/A-A)ₙ]ₘ₊₁;

(10) Y-[(A-B/A)ₙ-A]ₘ₊₁;

(11) Y-[(B/A-A)ₙ-B/A]ₘ₊₁;

wobei A für den vinylaromatischen Block und B/A für die Weichphase, also den statistisch aus Dien- und vinylaromatischen Einheiten aufgebauten Block steht, X den Rest eines (m+1)-funktionellen Initiators, Y den Rest eines (m+1)-funktionellen Kopplungsmittels und m und n natürliche Zahlen von 1 bis 10 bedeuten.

Bevorzugt ist ein Blockcopolymerisat einer der allgemeinen Formeln A-B/A-A, X-[-B/A-A]₂ und Y-[-B/A-A]₂ (Bedeutung der Abkürzungen wie vorstehend) und besonders bevorzugt ein Blockcopolymerisat, dessen Weichphase unterteilt ist in Blöcke

(12) (B/A)₁-(B/A)₂;

(13) (B/A)₁-(B/A)₂-(B/A)₁;

(14) (B/A)₁-(B/A)₂-(B/A)₃;

deren Vinylaromat/Dien-Verhältnis in den einzelnen Blöcken B/A unterschiedlich ist oder sich innerhalb eines Blocks in den Grenzen (B/A)₁ ⇒ (B/A)₂ kontinuierlich ändert, wobei die Glasübergangstemperatur Tg jedes Teilblocks unter 25°C liegt.

Ein Blockcopolymerisat, das mehrere Blöcke B/A und/oder A mit unterschiedlicher Molmasse je Molekül aufweist, ist ebenfalls bevorzugt.

Erfindungsgemäße Blockcopolymerisate eignen sich hervorragend zur Herstellung von kautschukelastischen Formteilen mit den üblichen Methoden der Thermoplastverarbeitung, z.B. als Folie, Schaum, Thermoformling, Spritzgußformling oder Profilextrudat.

Bevorzugt als vinylaromatische Verbindung im Sinne der Erfindung ist Styrol und ferner α-Methylstyrol, Vinyltoluol und Diphenylethylen sowie Mischungen dieser Verbindungen. Bevorzugte Diene sind Butadien und Isopren, ferner Piperylen, 1-Phenylbutadien sowie Mischungen dieser Verbindungen.

Eine besonders bevorzugte Monomerkombination ist Butadien und Styrol. Alle nachstehenden Gewichts- und Volumenangaben beziehen sich auf diese Kombination; bei Verwendung der technischen äquivalente von Styrol und Butadien muß man ggf. die Angaben entsprechend umrechnen.

Der B/A-Block (Weichblock) wird aus etwa 25 bis 70 Gew.-% Butadien und 75 bis 30 Gew.-% Styrol aufgebaut. Besonders bevorzugt hat ein Weichblock einen Butadienanteil zwischen 35 und 70 % und einen Styrolanteil zwischen 65 und 30 %.

Der Gewichtsanteil des Diens im gesamten Blockcopolymer liegt im Falle der Monomerkombination Styrol/Butadien bei 15 bis 65 Gew.-%, derjenige der vinylaromatischen Komponente entsprechend bei 85 bis 35 Gew.-%. Besonders bevorzugt sind Butadien-Styrol-Blockcopolymere mit einer Monomerzusammensetzung aus 25 bis 60 Gew.-% Dien und 75 bis 40 Gew.-% an vinylaromatischer Verbindung.

Erfindungsgemäß werden die Blockcopolymeren durch anionische Polymerisation in einem unpolaren Lösungsmittel unter Zusatz eines polaren Cosolvens hergestellt. Es besteht dabei die Vorstellung, daß das Cosolvens gegenüber dem Metallkation als Lewis-Base wirkt. Als Lösungsmittel werden bevorzugt aliphatische Kohlenwasserstoffe wie Cyclohexan oder Methylcyclohexan verwendet. Als Lewis-Basen werden polare aprotische Verbindungen wie Ether und tertiäre Amine bevorzugt. Beispiele für besonders effektive Ether sind Tetrahydrofuran und aliphatische Polyether wie Diethylenglycoldimethylether. Als tert. Amine sind Tributylamin und Pyridin zu nennen. Das polare Cosolvens wird dem unpolaren Lösungsmittel in einer geringen Menge, z.B. von 0.5 bis 5 Vol.-% zugesetzt. Besonders bevorzugt ist Tetrahydrofuran in einer Menge von 0.1 bis 0.3 Vol.-% . Erfahrungsgemäß kommt man mit einer Menge von etwa 0.2 Vol.-% in den meisten Fällen aus.

Durch die Dosierung und Struktur der Lewis-Base werden die Copolymerisationsparameter und der Anteil an 1,2- bzw 1,4-Verknüpfungen der Dieneinheiten bestimmt. Die erfindungsgemäßen Polymeren haben z.B. einen Anteil von 15 bis 40 % an 1,2-Verknüpfungen und 85 bis 60 % an 1,4-Verknüpfungen bezogen auf alle Dieneinheiten.

Die anionische Polymerisation wird mittels metallorganischer Verbindungen initiiert. Bevorzugt sind Verbindungen der Alkalimetalle, besonders des Lithiums. Beispiele für Initiatoren sind Methyllithium, Ethyllithium, Propyllithium, n-Butyllithium, sek. Butyllithium und tert. Butyllithium. Die metallorganische Verbindung wird als Lösung in einem chemisch indifferenten (inerten) Kohlenwasserstoff zugesetzt. Die Dosierung richtet sich nach dem angestrebten Molekulargewicht des Polymeren, liegt aber in der Regel im Bereich von 0.002 bis 5 Mol % , wenn man sie auf die Monomeren bezieht.

Die Polymerisationstemperatur kann zwischen 0 und 130°C betragen. Bevorzugt wird der Temperaturbereich zwischen 30 und 100°C.

Für die mechanischen Eigenschaften ist der Volumenanteil der Weichphase im Festkörper von entscheidender Bedeutung. Erfindungsgemäß liegt der Volumenanteil der aus Dien- und vinylaromatischen Sequenzen aufgebauten Weichphase bei 60 bis 95, bevorzugt bei 70 bis 90 und besonders bevorzugt bei 80 bis 90 Vol.-%. Die aus den vinylaromatischen Monomeren entstandenen Blöcke A bilden die Hartphase, deren Volumenanteil entsprechend 5 bis 40, bevorzugt 10 bis 30 und besonders bevorzugt 10 bis 20 Vol.-% ausmacht.

Es ist darauf hinzuweisen, daß zwischen den oben erwähnten Mengenverhältnissen von vinylaromatischer Verbindung und Dien, den vorstehend angegebenen Grenzwerten der Phasenvolumina und der Zusammensetzung, die sich aus den erfindungsgemäßen Bereichen der Glastemperatur ergibt, keine strenge Übereinstimmung besteht, da es sich um jeweils auf volle Zehnerstellen gerundete Zahlenwerte handelt. Dies könnte vielmehr nur zufällig der Fall sein.

Meßbar ist der Volumenanteil der beiden Phasen mittels kontrastierter Elektronenmikroskopie oder Festkörper-NMR-Spektroskopie. Der Anteil der vinylaromatischen Blöcke läßt sich nach Osmiumabbau des Polydienanteils durch Fällen und Auswiegen bestimmen. Das künftige Phasenverhältnis eines Polymeren läßt sich auch aus den eingesetzten Monomermengen berechnen, wenn man jedesmal vollständig auspolymerisieren läßt.

Zusätzlich ist darauf hinzuweisen (vgl. J. Brandrup, E.H. Immergut, Polymer Handbook, John Wiley, N.Y.), daß die Dichten für Styrol-Butadien-Copolymere sich annähernd aus den Massenanteilen der Monomeren berechnen lassen; so beträgt die Dichte von Polybutadien (anionisch polymerisiert) 0,895 g/ml, die Dichte von Polystyrol etwa 1,05 g/ml (Mittelwert), während für ein Styrol-Butadien-Copolymer (SB-Rubber) mit 23,5 % Styrolanteil die Dichte mit 0,933 angegeben ist. Die berechnete Dichte wäre 0,960.

Im Sinne der Erfindung eindeutig definiert wird das Blockcopolymere durch den Quotienten aus dem Volumenanteil in Prozent der aus den B/A-Blöcken gebildeten Weichphase und dem Anteil an Dieneinheiten in der Weichphase, der für die Kombination Styrol/ Butadien zwischen 25 und 70 Gew.-% liegt.

Durch den statistichen Einbau der vinylaromatischen Verbindungen in den Weichblock des Blockcopolymeren und die Verwendung von Lewis-Basen während der Polymerisation wird die Glasübergangstemperatur (Tg) beeinflußt. Eine Glasübergangstemperatur zwischen -50 und +25°C, bevorzugt -50 bis +5°C ist typisch.

Die Glasübergangstemperatur (Tg) der Blöcke A liegt über 25°C, bevorzugt über 50°C.

Das Molekulargewicht des Blocks A liegt dabei i.a. zwischen 1.000 bis 200.000, bevorzugt zwischen 3.000 und 80.000 [g/mol]. Innerhalb eines Moleküls können A-Blöcke unterschiedliche Molmasse haben.

Das Molekulargewicht des Blocks B/A liegt üblicherweise zwischen 2.000 bis 250.000 [g/mol], bevorzugt werden Werte zwischen 5.000 bis 150.000 [g/mol].

Auch Block B/A kann wie Block A innerhalb eines Moleküls unterschiedliche Molekulargewichtswerte einnehmen.

Das Kupplungszentrum X wird durch die Umsetzung der lebenden anionischen Kettenenden mit einem mindestens bifunktionellen Kupplungsagens gebildet. Beispiel für derartige Verbindungen sind in den US-PSen 3 985 830, 3 280 084, 3 637 554 und 4 091 053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde wie Terephthalaldehyd und Ester wie Ethylformiat oder -benzoat geeignet.

Bevorzugte Polymerstrukturen sind A-B/A-A, X-[-B/A-A]₂ und Y-[-B/A-A]₂, wobei der statistische Block B/A selbst wieder in Blöcke Bl/A1-B2/A2-B3/A3-... unterteilt sein kann. Bevorzugt besteht der statistische Block aus 2 bis 15 statistischen Teilblöcken, besonders bevorzugt aus 3 bis 10 Teilblöcken. Die Aufteilung des statistischen Blocks B/A in möglichst viele Teilblöcke Bn/An bietet den entscheidenden Vorteil, daß auch bei einem Zusammensetzungsgradienten innerhalb eines Teilblocks Bn/An, wie er sich in der anionischen Polymerisation unter praktischen Bedingungen nur schwer vermeiden läßt (s.u.), sich der B/A-Block insgesamt wie ein nahezu perfektes statistisches Polymer verhält. Es bietet sich deshalb an, weniger als die theoretische Menge an Lewis-Base zuzusetzen, was den Anteil 1,4-Dienverknüpfungen erhöht, die Glastemperatur Tg absenkt und die Vernetzungsanfälligkeit des Polymeren mindert. Ein größerer oder ein kleinerer Anteil der Teilblöcke kann mit einem hohen Dienanteil ausgestattet werden. Dies bewirkt, daß das Polymer auch unterhalb der Glastemperatur der überwiegenden B/A-Blöcke eine Restzähigkeit behält und nicht vollständig versprödet.

Die erfindungsgemäßen Blockcopolymeren besitzen ein dem Weich-PVC sehr ähnliches Eigenschaftsspektrum, können jedoch vollkommen frei von migrationsfähigen, niedermolekularen Weichmachern hergestellt werden. Sie zeichnen sich durch eine hohe Sauerstoffpermeation P_{O} und Wasserdampfpermeation P_{W} von über 2.000 [cm³·100 µm/m²·d·bar] bzw. über 10 [g 100 µm/m²·d·bar] aus, wobei P_{O} die Sauerstoffmenge in cm³ bzw. P_{W} die Wasserstoffmenge in Gramm angibt, die durch 1 m² Folie mit einer Normdicke von 100 µm je Tag und je bar Partialdruckdifferenz hindurchtreten.

Eine hohe Rückstellkraft bei Deformation, so wie man sie bei thermoplastischen Elastomeren beobachtet, eine hohe Transparenz (über 90 % bei 10 µm Schichtdicke), eine niedrige Verschweißtemperatur von weniger als 120°C und ein breiter Schweißbereich (über 5°C) bei einer moderaten Klebrigkeit machen die erfindungsgemäßen Blockcopolymeren zu einem geeigneten Ausgangsmaterial für die Herstellung von sogenannten Dehn- oder Stretchfolien, Infusionsschläuchen und anderen extrudierten, spritzgegossenen, thermogeformten oder blasgeformten Fertigteilen, für die hohe Transparenz und Zähigkeit verlangt werden, insbesondere für Anwendungen im Bereich der Medizintechnik.

Die Polymerisation wird mehrstufig durchgeführt und bei monofunktioneller Initiierung z.B. mit der Herstellung des Hartblocks A begonnen. Ein Teil der Monomeren wird im Reaktor vorgelegt und die Polymerisation durch Zugabe des Initiators gestartet. Um einen definierten, aus der Monomer- und Initiatordosierung berechenbaren Kettenaufbau zu erzielen, ist es empfehlenswert, den Prozeß bis zu einem hohen Umsatz (über 99 %) zu führen, bevor die zweite Monomerzugabe erfolgt. Zwingend erforderlich ist dies jedoch nicht.

Die Abfolge der Monomerzugabe richtet sich nach dem gewählten Blockaufbau. Bei monofunktioneller Initiierung wird z.B. zuerst die vinylaromatische Verbindung entweder vorgelegt oder direkt zudosiert. Danach sollten Dien und Vinylaromat möglichst gleichzeitig zugegeben werden. Durch das Mengenverhältnis von Dien zu vinylaromatischer Verbindung, die Konzentration und chemische Struktur der Lewis-Base sowie die Temperatur wird der statistische Aufbau und die Zusammensetzung des Blocks B/A bestimmt. Erfindungsgemäß nimmt das Dien relativ zur Gesamtmasse einschließlich vinylaromatischer Verbindung einen Gewichtsanteil von 50 % oder weniger ein. Anschließend kann Block A durch Zugabe des Vinylaromaten anpolymerisiert werden. Stattdessen können benötigte Polymerblöcke auch durch die Kopplungsreaktion miteinander verbunden werden. Im Falle der bifunktionellen Initiierung wird zuerst der B/A-Block aufgebaut, gefolgt vom A-Block.

Die weitere Aufarbeitung erfolgt nach den üblichen Verfahren. Es empfiehlt sich, dabei in einem Rührkessel zu arbeiten und mit einem Alkohol wie Isopropanol die Carbanionen zu protonieren, vor der weiteren Aufarbeitung in üblicher weise mit CO₂/Wasser schwach sauer zu stellen, das Polymer mit einem Oxidationsinhibitor und einem Radikalfänger (handelsübliche Produkte wie Trisnonylphenylphosphit (TNPP) oder α-Tokopherol (Vitamin E) bzw. unter dem Handelsnamen Irganox 1076 oder Irganox 3052 erhältliche Produkte) zu stabilisieren, das Lösungsmittel nach den üblichen Verfahren zu entfernen, zu extrudieren und zu granulieren. Das Granulat kann wie andere Kautschuksorten mit einem Antiblockmittel wie Acrawax® , Besquare® oder Aerosil® gegen Verkleben geschützt werden.

### Beispiele

Für jedes Beispiel wurde ein simultan heiz- und kühlbarer 50 l-Edelstahlautoklav, der mit einem Kreuzbalkenrührer ausgerüstet war, durch Spülen mit Stickstoff, Auskochen mit einer Lösung von sec-Butyllithium und 1,1-Diphenylethylen (Molverhältnis 1:1) in Cyclohexan und Trocknen vorbereitet.

Dann wurden jeweils 22,8 l Cyclohexan eingefüllt und die in der Tabelle 1 angegebenen Mengen an Initiator, Tetrahydrofuran und Monomeren zugesetzt. Angegeben ist auch die Polymerisationsdauer, Anfangs- und Endtemperatur, wobei darauf hinzuweisen ist, daß die Monomerzulaufszeit stets klein gegenüber der Polymerisationszeit war.

Die Temperatur des Reaktionsgemisches wurde durch Heizung oder Kühlung des Reaktormantels gesteuert. Nach Umsetzungsende (Verbrauch der Monomeren) wurde in den Beispielen 1-10 mit Ethanol, im Beispiel 11 mit Ethylformiat und in Beispiel 12 mit epoxidiertem Leinsamenöl bis zur Farblosigkeit bzw. in den Beispielen 11 und 12 bis hellgelb titriert und die Mischung mit einem 1,5-fachen Überschuß an Ameisensäure sauer gestellt. Zuletzt wurden 34 g eines handelsüblichen Stabilisators (Irganox® 3052 der Ciba-Geigy, Basel) und 82 g Trisnonylphenylphosphit zugesetzt.

Die Lösung wurde auf einem Entgasungsextruder (drei Dome, Vorwärts- und Rückwärtsentgasung) bei 200°C aufgearbeitet und granuliert. Das Granulat wurde in einem Fluidmischer mit 10 g Acrawax® als Außenschmierung versetzt.

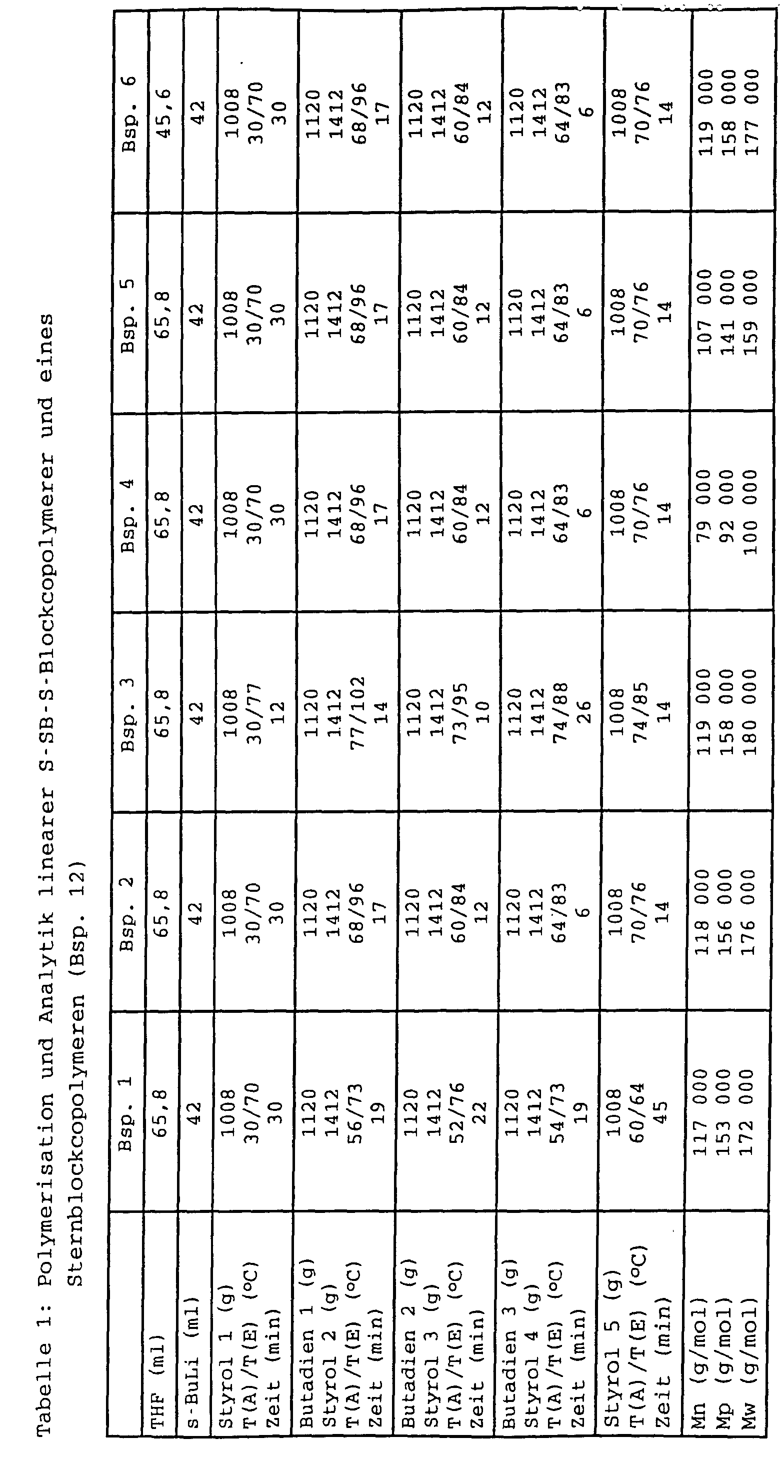

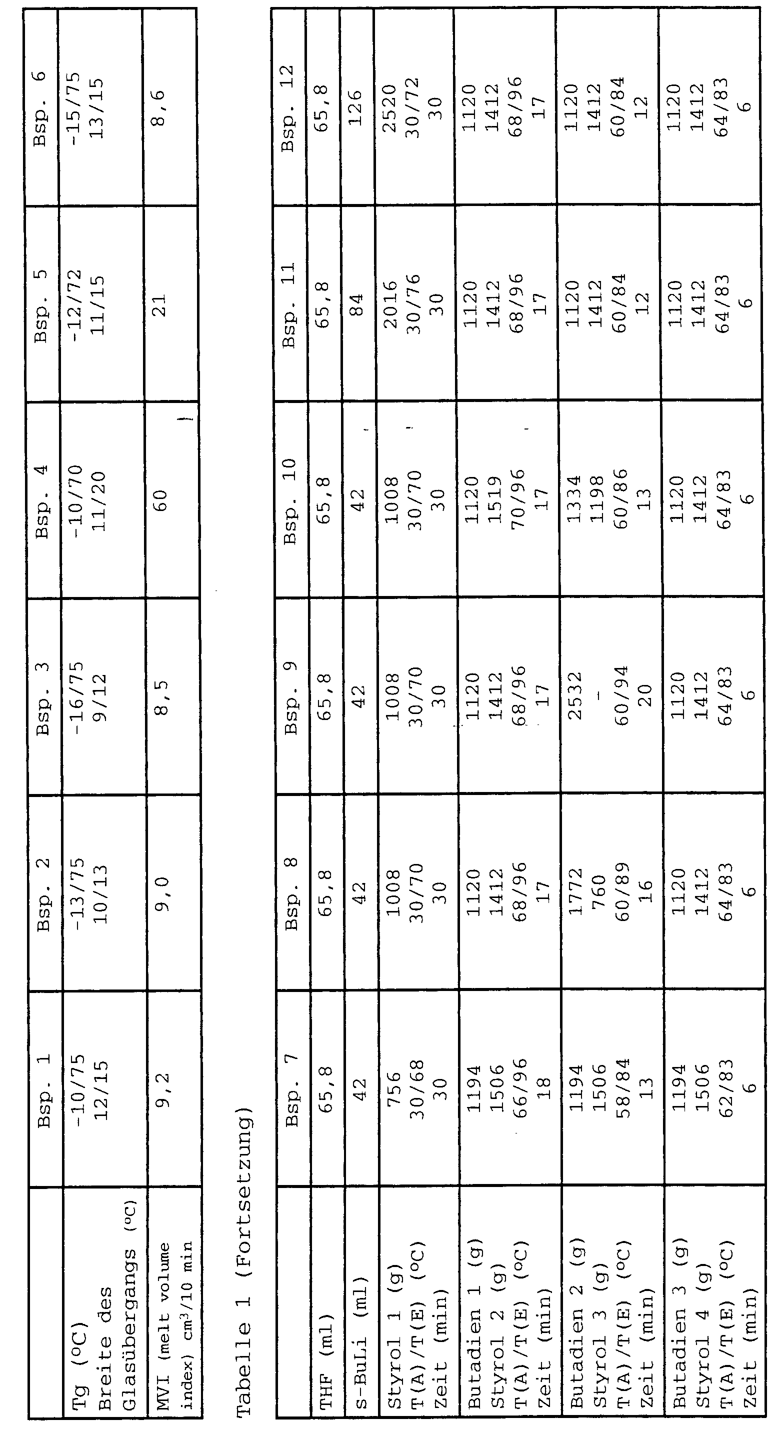

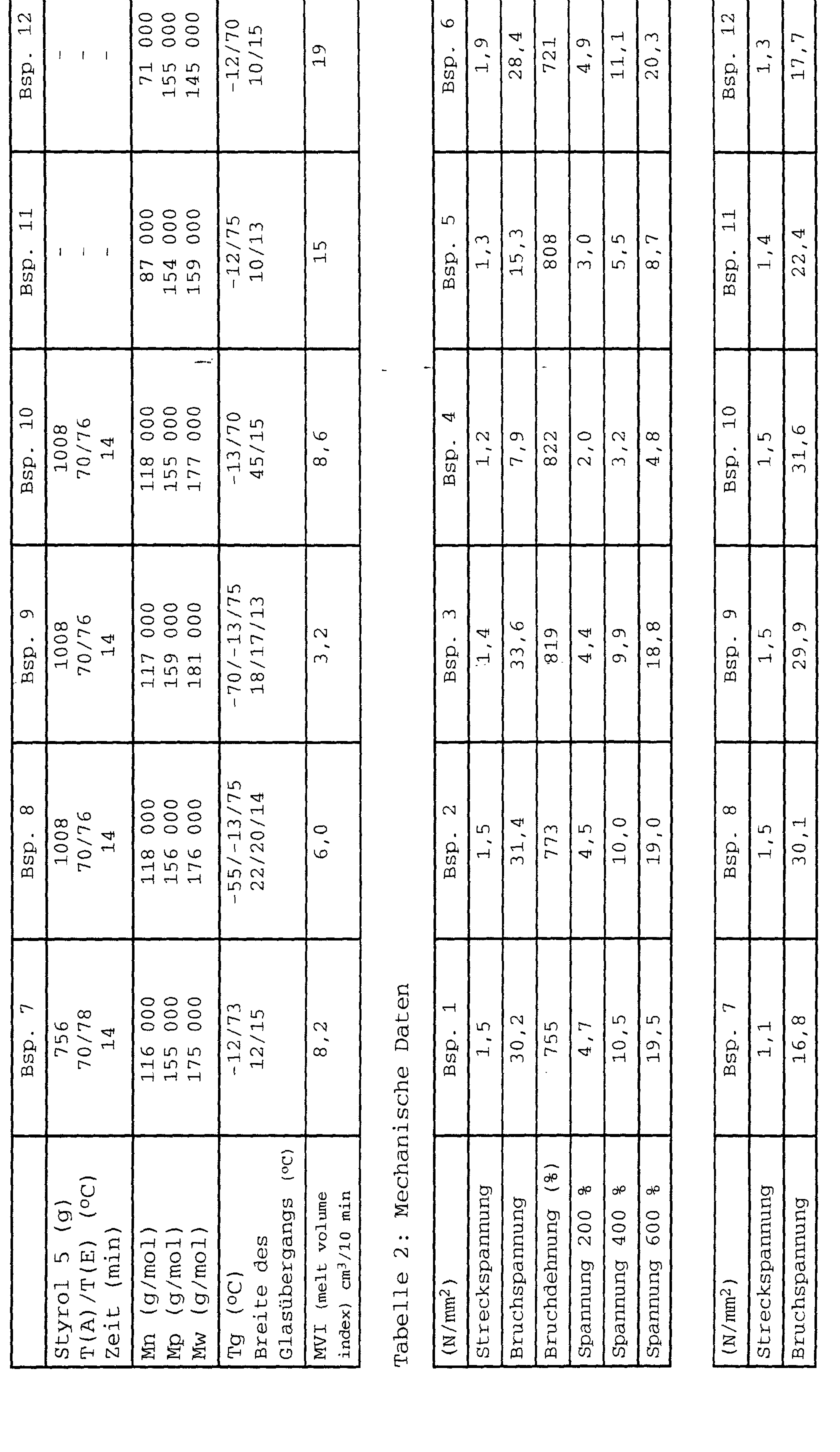

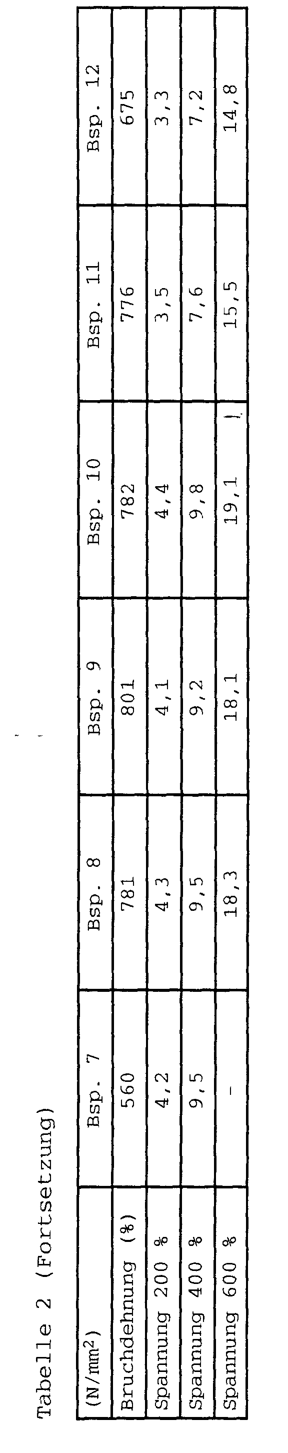

## Patentansprüche

1. Kautschukelastisches Blockcopolymerisat aus 35 bis 85 Gew.-% Styrol und 15 bis 65 Gew.-% Butadien, wobei das Blockcopolymerisat im wesentlichen aus
a) zwei oder mehreren Blöcken A (Hartphase), die einpolymerisierte Einheiten Styrol und eine Glastemperatur über 25°C aufweisen und
b) mindestens einem elastomeren Block B/A (Weichphase), der sowohl einpolymerisierte Einheiten Styrol (A) als auch Butadien (B) enthält, mit statistischem Aufbau und einer Glasübergangstemperatur Tg von -50 bis +25°C,
besteht
und wobei der Anteil der aus den Blöcken A gebildeten Hartphase am gesamten Blockcopolymerisat 5 bis 40 Vol.-% ausmacht.

2. Blockcopolymerisat nach Anspruch 1, **dadurch gekennzeichnet, daß** der Gewichtsanteil des Butadiens weniger als 50 Gew.-% beträgt.

3. Blockcopolymerisat nach den Ansprüchen 1 oder 2, **dadurch gekennzeichnet, daß** der Block B/A aus 30 bis 75 Gew.-% Styrol und 25 bis 70 Gew.-% Butadien aufgebaut ist.

4. Blockcopolymerisat nach einem der Ansprüche 1 bis 3, **dadurch gekennzeichnet, daß** die Glasübergangstemperatur Tg des Blocks A über 50°C und die des Blocks B/A zwischen -50 bis +5°C liegt.

5. Blockcopolymerisat nach einem der Ansprüche 1 bis 4, dargestellt durch eine der allgemeinen Formeln (2), (5) bis (7) oder (9) bis (11)
(2) (A-B/A)ₙ-A;
(5) X-[(B/A-A)ₙ]ₘ₊₁;
(6) X-[(A-B/A)ₙ-A]ₘ₊₁
(7) X-[(B/A-A)ₙ-B/A]ₘ₊₁
(9) Y-[(B/A-A)ₙ]ₘ₊₁
(10) Y-[(A-B/A)ₙ-A]ₘ₊₁
(11) Y-[(B/A-A)ₙ-B/A]ₘ₊₁
wobei A für den vinylaromatischen Block und B/A für den statistischen Block aus Dien- und vinylaromatischen Einheiten steht, X den Rest eines (m+1)-funktionellen Initiators, Y den Rest eines (m+1)-funktionellen Kopplungsmittels und m und n natürliche Zahlen von 1 bis 10 bedeuten.

6. Blockcopolymerisat nach Anspruch 5 einer der allgemeinen Formeln A-B/A-A, X-[-B/A-A]₂ und Y-[-B/A-A]₂.

7. Blockcopolymerisat nach einem der Ansprüche 1 bis 6, dessen Weichphase unterteilt ist in Blöcke
(12) (B/A)₁-(B/A)₂;
(13) (B/A)₁-(B/A)₂-(B/A)₁
oder
(14) (B/A)₁-(B/A)₂-(B/A)₃,
wobei die Indices 1, 2, 3 unterschiedliche Vinylaromat/Dien-Verhältnisse oder Molmassen in den einzelnen Blöcken B/A bedeutet und die Glasübergangstemperatur T_{g} jedes Teilblocks unter 25°C liegt.

8. Blockcopolymerisat nach einem der Ansprüche 1 bis 7, **dadurch gekennzeichnet, daß** das Blockcopolymerisat eine Bruchdehnung von 560 % oder höher aufweist.

9. Blockcopolymerisat nach einem der Ansprüche 1 bis 8, **dadurch gekennzeichnet, daß** die im Festkörper aus den Blöcken A gebildete Hartphase 10 bis 30 Vol.-% ausmacht.

10. Verfahren zur Herstellung von Blockcopolymerisaten nach den Ansprüchen 1 bis 9, **dadurch gekennzeichnet, daß** man zuerst einen Block A durch anionische Polymerisation mit einem monofunktionellen Initiator polymerisiert, anschließend ein oder mehrere Blöcke B/A in Gegenwart eines polaren Cosolvens anpolymerisiert und abschließend einen weiteren Block A anfügt oder die lebenden Kettenenden mit einem Kupplungsagens verknüpft.

11. Verwendung der Blockcopolymerisate nach den Ansprüchen 1 bis 9 zur Herstellung von Folien, Formteilen oder Schäumen.

## Claims

1. An elastomeric block copolymer of from 35 to 85% by weight of styrene and from 15 to 65% by weight of butadiene, the block copolymer substantially comprising
a) two or more blocks A (hard phase) which have polymerized styrene units and a glass transition temperature above 25°C and
b) at least one elastomeric block B/A (soft phase) which contains both polymerized units of styrene (A) and butadiene (B), has a random structure and a glass transition temperature Tg of from -50 to +25°C,
and the amount of the hard phase formed from the blocks A accounting for from 5 to 40% by volume, based on the total block copolymer.

2. A block copolymer as claimed in claim 1, wherein the amount of butadiene is less than 50% by weight.

3. A block copolymer as claimed in claim 1 or 2, wherein the block B/A is composed of from 30 to 75% by weight of styrene and from 25 to 75% by weight of butadiene.

4. A block copolymer as claimed in any of claims 1 to 3, wherein the glass transition temperature Tg of block A is above 50°C and that of block B/A is from -50 to +5°C.

5. A block copolymer as claimed in any of claims 1 to 4, of one of the formulae (2), (5) to (7) or (9) to (11)
(2) (A-B/A)ₙ-A;
(5) X-[(B/A-A)ₙ]ₘ₊₁;
(6) X-[(A-B/A)ₙ-A]ₘ₊₁;
(7) X-[(B/A-A)ₙ-B/A]ₘ₊₁;
(9) Y-[(B/A-A)ₙ]ₘ₊₁;
(10) Y-[(A-B/A)ₙ-A]ₘ₊₁;
(11) Y-[(B/A-A)ₙ-B/A]ₘ₊₁;
A being the vinyl aromatic block and B/A being the random block of diene and vinyl aromatic units, X being a radical of an (m+1) functional initiator, Y being a radical of an (m+1) functional coupling agent and m and n being natural numbers of from 1 to 10.

6. A block copolymer as claimed in claim 5, of one of the formulae A-B/A-A, X-[-B/A-A]₂ and Y-[-B/A-A]₂.

7. A block copolymer as claimed in any of claims 1 to 6, whose soft phase is divided into blocks
(12) (B/A)₁-(B/A)₂;
(13) (B/A)₁-(B/A)₂-(B/A)₁
or
(14) (B/A)₁-(B/A)₂-(B/A)₃,
the indices 1, 2 and 3 being different vinyl aromatic/diene ratios or molar masses in the individual blocks B/A and the glass transition temperature Tg of each part-block being less than 25°C.

8. A block copolymer as claimed in any of claims 1 to 7, which has an elongation at break of 560% or higher.

9. A block copolymer as claimed in any of claims 1 to 8, wherein the hard phase formed in the solid from the blocks A accounts for from 10 to 30% by volume.

10. A process for the preparation of block copolymers as claimed in any of claims 1 to 9, wherein first a block A is polymerized by anionic polymerization with a monofunctional initiator, one or more blocks B/A are then polymerized on in the presence of a polar cosolvent and finally a further block A is added or the living chain ends are linked to a coupling agent.

11. The use of a block copolymer as claimed in any of claims 1 to 9 for the production of films, shaped articles or foams.

## Revendications

1. Copolymère bloc à élasticité de caoutchouc, à base de 35 à 85% en poids de styrène et de 15 à 65% en poids de butadiène, le copolymère bloc étant essentiellement constitué de
a) deux ou plus de deux blocs A (phase dure) présentant des unités de styrène copolymérisées et une température de transition vitreuse supérieure à 25°C et
b) au moins un bloc élastomère B/A (phase molle) contenant à la fois des unités de styrène copolymérisées (A) et de butadiène (B), à structure statistique et possédant une température de transition vitreuse Tg de -50 à +25°C,
et la fraction de phase dure formée par les blocs A par rapport à l'ensemble du copolymère bloc étant de 5 à 40% en volume.

2. Copolymère bloc selon la revendication 1, **caractérisé en ce que** la fraction pondérale de butadiène est inférieure à 50% en poids.

3. Copolymère bloc selon la revendication 1 ou 2, **caractérisé en ce que** le bloc B/A est constitué de 30 à 75% en poids de styrène et de 25 à 70% en poids de butadiène.

4. Copolymère bloc selon l'une des revendications 1 à 3, **caractérisé en ce que** la température de transition vitreuse Tg du bloc A est supérieure à 50°C et celle du bloc B/A est comprise entre -50 et +5°C.

5. Copolymère bloc selon l'une des revendications 1 à 4, représenté par l'une des formules générales (2), (5) à (7) ou (9) à (11)
(2) (A-B/A)ₙ-A;
(3) X-[(B/A-A)ₙ]ₘ₊₁;
(4) X-[(A-B/A)ₙ-A]ₘ₊₁;
(5) X-[(B/A-A)ₙ-B/A]ₘ₊₁;
(9) Y-[(B/A-A)ₙ]ₘ₊₁;
(10) Y-[(A-B/A)ₙ-A]ₘ₊₁;
(11) Y-[(B/A-A)ₙ-B/A]ₘ₊₁,
où A représente le bloc vinylaromatique et B/A le bloc statistique constitué d'unités diène et vinylaromatique, X est le reste d'un initiateur à (m+1) fonctions, Y le reste d'un agent de couplage à (m+1) fonctions, et m et n sont des nombres naturels de 1 à 10.

6. Copolymère bloc selon la revendication 5 de l'une des formules générales A-B/A-A, X-[-B/A-A]₂ et Y-[-B/A-A]₂.

7. Copolymère bloc selon l'une des revendications 1 à 6, dont la phase molle est divisée en blocs
(12) (B/A)₁-(B/A)₂;
(13) (B/A)₁-(B/A)₂-5B/A)₁
ou
(14) (B/A)₁-(B/A)₂-(B/A)₃,
où les indices 1, 2, 3 signifient des rapports vinylaromatique/diène ou des masses molaires différents dans les blocs B/A individuels, la température de transition vitreuse Tg de chaque bloc partiel étant inférieure à 25°C.

8. Copolymère bloc selon l'une des revendications 1 à 7, **caractérisé en ce que** le copolymère bloc présente une élongation de rupture de 560% ou plus.

9. Copolymère bloc selon l'une des revendications 1 à 8, **caractérisé en ce que** la phase dure forée dans le corps solide à partir des blocs A représente de 10 à 30% en volume.

10. Procédé de préparation de copolymères blocs selon les revendications 1 à 9, **caractérisé en ce que** l'on polymérise d'abord un bloc A par polymérisation anionique avec un initiateur monofonctionnel, puis l'on y copolymérise un ou plusieurs blocs B/A en présence d'un cosolvant polaire, et l'on ajoute ensuite ou autre bloc A ou bien l'on réticule les bouts de chaîne vivants au moyen d'un agent de couplage.

11. Utilisation des copolymères blocs selon les revendications 1 à 9 pour la production de feuilles, corps façonnés ou mousses.
